# EUROPÄISCHE PATENTANMELDUNG

(11) **EP 3 020 611 A1**
(43) Veröffentlichungstag der Anmeldung: **18.05.2016**
(21) Anmeldenummer: 14193241.8
(22) Anmeldetag: 14.11.2014
(51) Int. Cl.: B61H 7/08, B61H 9/00, B61H 13/34, B60T 1/06

(54) **Bahnantrieb mit Bremseinrichtung**

(71) Anmelder: Siemens Aktiengesellschaft, 80333 München (DE)
(72) Erfinder: Hannes, Manfred, 94227 Zwiesel (DE); Pfannschmidt, Bernd, 90574 Rosstal (DE)

(57) **Zusammenfassung**

Die Erfindung betrifft einen Antrieb (1) eines Schienenfahrzeugs mit zwei um eine Achse (11) rotierende und durch eine Radsatzwelle (3) verbundene Treibräder (2), wobei achsparallel eine um eine weitere Achse (12) rotierende Welle (13) einer dynamoelektrischen Maschine angeordnet ist, wobei die Radsatzwelle (3) und die Welle (13) über ein Getriebe kraftschlüssig verbunden sind, wobei zwischen Getriebe (4) und dynamoelektrischer Maschine (8) zumindest eine Bremsvorrichtung (6) angeordnet ist.

## Beschreibung

Antriebe von Schienenfahrzeugen sind in Drehgestellen positioniert, wobei über eine Radsatzwelle die damit verbundenen Treibräder angetrieben werden. Bei Schienenfahrzeugen mit Antrieben im Achsbereich ist das Unterbringen von Bremseinrichtungen aus Platzgründen nahezu unmöglich, vor allem wenn eine kostengünstige, aber ausladende Form eines achsreitenden Getriebes mit drehgestellfestem Motor eingesetzt werden soll.

Bisher befanden sich die Bremsscheiben in den Treibrädern und die Bremsgeräte umfassen sie. Alternativ dazu saßen die Bremsscheiben auf der Radsatzwelle zwischen Getriebe und dem Treibrad. Diese Anordnungen nahmen jeweils unzulässig viel Raum zwischen den Treibrädern ein.

Die sogenannten innengelagerten Drehgestelle, bei denen die Radsatzwelle der Treibräder auf der Innenseite der Treibräder gelagert ist, sind die Platzverhältnisse äußerst beengt. Damit sind die oben ausgeführten Anordnungen einer Bremsvorrichtung nicht mehr möglich.

Aus der DE 195 04 766 C2 ist ein teilabgefederter Antrieb, für elektrische Triebfahrzeuge bekannt, mit einem Großrad, das einschließlich eines kapselnden Getriebegehäuses auf der Radachse gelagert ist und einem Kleinrad, das im Getriebegehäuse gelagert ist, bei dem der gekuppelte Motor fest am Drehgestell befestigt ist und die Befestigung des Getriebegehäuses am Drehgestell federnd elastisch über wenigstens zwei annähernd vertikal und diametral gegenüber der Kleinradachse angebracht elastische Federelemente am Drehgestell erfolgt.

Nachteilig dabei ist, dass die Platzverhältnisse keinen Raum für die Anordnung einer Bremsenvorrichtung zulassen. Ausgehend davon liegt dem Fachmann die Aufgabe zugrunde, ein Drehgestell mit einem Antrieb zu schaffen, der aufgrund der beengten Platzverhältnisse eine ausreichende Anordnung von Bremsvorrichtungen, insbesondere bei innengelagerten Drehgestellen ermöglicht.

Die Lösung der gestellten Aufgabe gelingt durch einen Antrieb eines Schienenfahrzeugs mit zwei um eine Achse rotierende und durch eine Radsatzwelle verbundene Treibräder, wobei achsparallel eine um eine weitere Achse rotierende Welle einer dynamoelektrischen Maschine angeordnet ist, wobei die Radsatzwelle und die Welle über ein Getriebe kraftschlüssig verbunden sind, wobei zwischen Getriebe und dynamoelektrischer Maschine zumindest eine Bremsvorrichtung angeordnet ist.

Die Bremsvorrichtung befindet sich nunmehr vorteilhafterweise auf der sich vergleichsweise schnelldrehenden Welle der dynamoelektrischen Maschine bzw. der Eingangswelle des Getriebes. Dabei ist sie in dem vorhandenen Raum zwischen dynamoelektrischer Maschine und Getriebe positioniert.

Damit ist nunmehr in einer Ausführungsform eines Drehgestells weiterhin die Radsatzwelle mit einer Innenlagerung ausführbar, was die Konstruktion eines derartigen Drehgestells vereinfacht.

Grundsätzlich ist es aber auch möglich eine derartige Bremsvorrichtung bei einer außengelagerten Radsatzwelle eines Drehgestells vorzusehen. Damit wird zwischen den Treibrädern Platz geschaffen, der beispielsweise für einen im Durchmesser gleichen, aber axial längeren Motor genutzt wird und damit den Einsatz eines leistungsstärkeren Motors ermöglicht. Bei gleicher Antriebsleistung des Motors kann dieser aber auch immer Durchmesser geringer, aber dafür axial länger ausgeführt sein.

Um einen derartigen vorteilhaften kompakten Aufbau zu erhalten ist die dynamoelektrische Maschine, also der Antriebsmotor eines Schienenfahrzeugs, beispielsweise im Stator mit Zahnspulen ausgeführt, die eine vergleichsweise geringe axiale Ausladung des Wickelkopfes aufweisen.

Das Getriebe ist vorteilhafterweise als Zahnradgetriebe, insbesondere einstufiges Stirnradgetriebe ausgeführt, um die vorhandenen Platzverhältnisse im Drehgestell optimal auszunutzen und das Drehmoment hocheffizient an die Radsatzwelle zu leiten.

Vorteilhafterweise ist zwischen Getriebe und Motorwelle eine Kupplung vorgesehen, die sowohl einen axialen und/oder radialen und/oder einen Winkelversatz von Motorwelle und Getriebeeingangswelle beim Einbau und/oder Betrieb des Antriebs ausgleichen kann.

Die Bremsscheibe wird dabei entweder direkt auf Teilen der Kupplung befestigt, welche das Drehmoment von der Motorwelle auf das Getriebe überträgt, und dabei Relativbewegungen zwischen Motor und Getriebe zulässt.

Alternativ dazu wird die Bremsscheibe direkt auf der Welle zwischen dynamoelektrischer Maschine und Kupplung oder auf der Eingangswelle des Getriebes zwischen Kupplung und Getriebe befestigt.

Die Bremsgeräte selbst werden dabei am Gehäuse der dynamoelektrischen Maschine und/oder am Gehäuse des Getriebes befestigt, um das aufzubringende Bremsmoment abstützen zu können.

Vorteilhafterweise kann die Bremsscheibe mit einer entsprechenden Ausgestaltung beispielsweise einer lüfterähnlichen Ausgestaltung versehen sein, die die Belüftung der dynamoelektrischen Maschine und/oder des Getriebes zumindest unterstützt.

Erfindungsgemäß wird nunmehr ein äußerst kompakter leistungsfähiger Antrieb bereitgestellt, der vor allem auch Drehgestelle mit innengelagerter Radsatzwelle einsetzbar ist.

Die Erfindung sowie weitere vorteilhafte Ausgestaltungen der Erfindung werden anhand eines Ausführungsbeispiels näher erläutert; darin zeigen:
- FIG 1: ein Antrieb mit innengelagertem Drehgestell,
- FIG 2: ein Antrieb mit außengelagertem Drehgestell.

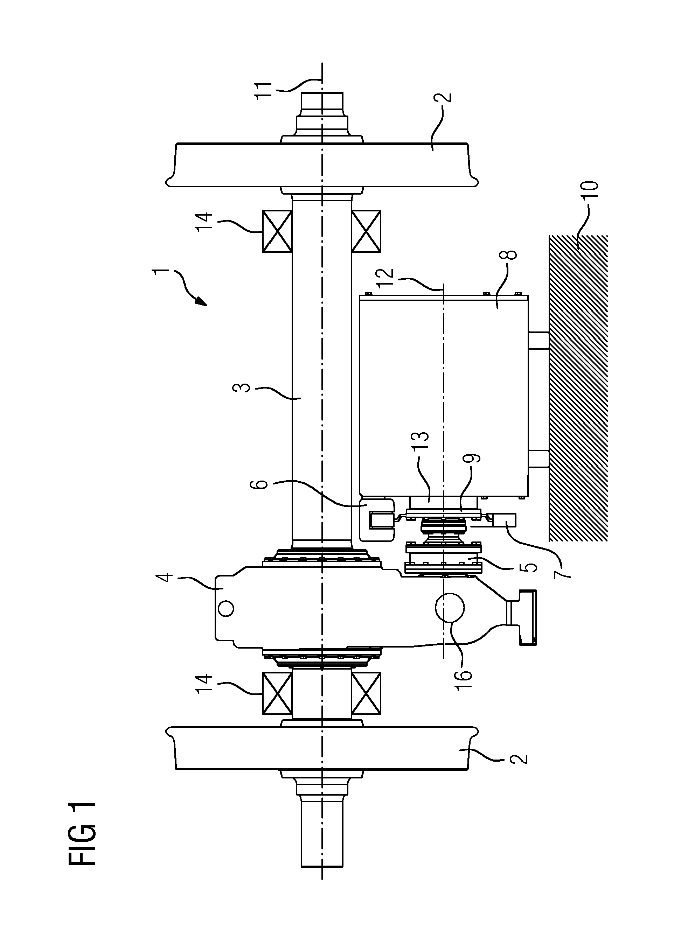

FIG 1 einen Antrieb 1 eines Drehgestells z.B. eines nicht näher dargestellten Triebfahrzeugs oder einer Lokomotive in Draufsicht, bei dem zwei Treibräder 2 durch eine Radsatzwelle 3 verbunden sind, die um eine Achse 11 drehbar gelagert sind. Die Lager 14 sind dabei innerhalb der beiden Treibräder 2 angeordnet. Die Radsatzwelle 3 wird dabei über ein Getriebe 4 angetrieben, wobei sich das Getriebe 4 durch ein Getriebegroßrad, das die Radsatzwelle umfängt und drehfest mit diesem verbunden ist und ein Getriebekleinrad, das sich im Wesentlichen in axialer Verlängerung der Achse 12 einer Motorwelle 13 befindet, angeordnet ist.

Zwischen Getriebekleinrad und Motorwelle 13 ist zumindest eine Kupplung 5, 9 vorgesehen, die sowohl einen axialen und/oder radialen und/oder einen Winkelversatz von Motorwelle 13 und Getriebeeingangswelle beim Einbau und/oder Betrieb des Antriebs ausgleichen kann. Idealerweise fluchten die Achse 12 der Motorwelle 13 und die Achse der Getriebeeingangswelle axial.

Vorteilhafterweise ist das Getriebe 4 als einstufiges Stirnradgetriebe ausgeführt, um die Platzverhältnisse zwischen den Treibrädern 2 optimal auszunutzen.

Die Motorwelle 13 und die Getriebeeingangswelle sind durch eine oder - in diesem Fall nicht dargestellt - mehrere Kupplungen 5, 9 miteinander verbunden. Die Anordnung der Bremsvorrichtung 6 ist dabei entweder auf der Motor- und/oder auf der Getriebeseite bauraumsparend angeordnet. Eine Bremswirkung stellt sich nun dadurch ein, dass die Bremsvorrichtung 6 durch einen Bremsimpuls einer Steuervorrichtung Bremsbacken an die Bremsscheibe 7 drückt und so einen Bremsvorgang einleitet. Dabei wird ein Bremsmoment entfaltet, das sich über die Kupplungen 5, 9 und das Kleinrad auf das Großrad des Getriebes 4 überträgt und damit die Radsatzwelle 3 bremst. Das Bremsmoment stützt sich dabei an dem Motorgehäuse oder dem Getriebegehäuse ab, die jeweils mit dem Drehgestell 10 mechanisch verbunden sind. Der Motor 8 selbst ist dabei durch geeignete Vorrichtungen an dem Drehgestell 10 angebracht.

Das Getriebegehäuse ist insbesondere im Bereich seines Kleinrades über elastische Federelemente am Drehgestell 10 abgestützt. Die Federelemente können beispielsweise über einen C-Bügel mit dem Drehgestell 10 mechanisch verbunden sein.

Vorteilhafterweise kann die Bremsscheibe, insbesondere im achsnahen Bereich der Motorwelle 13 konstruktiv derart ausgeführt werden, dass damit eine Innenbelüftung des Motors 8 zumindest unterstützt wird.

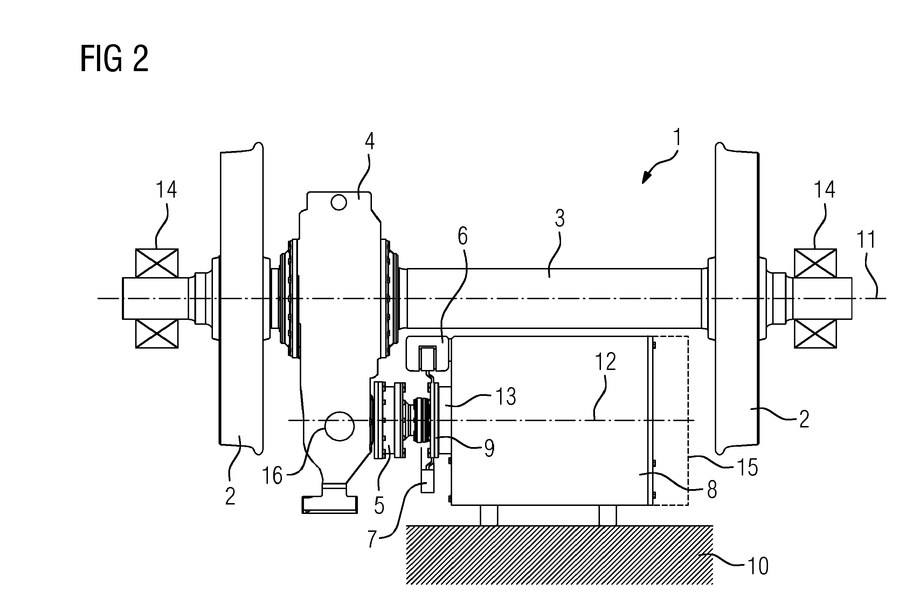

FIG 2 zeigt einen weiteren Antrieb 1 in Draufsicht, bei dem zwei Treibräder 2 ebenfalls durch eine Radsatzwelle 3 verbunden sind, die um eine Achse 11 drehbar gelagert sind. Die Lager 14 sind dabei außerhalb der beiden Treibräder 2 angeordnet und an dem Drehgestell 10 - nicht näher dargestellt - abgestützt. Ansonsten entspricht der konstruktive Aufbau des Antriebs gemäß FIG 2 dem Antrieb gemäß FIG 1. Auch die Anordnung der Bremseinrichtung 6, sowie deren Ansteuerung ist gleich.

Auffallend ist des Weiteren, dass bei ansonsten identischer Anordnung der Antriebs Bauraum 15 insbesondere bei dem außengelagerten Drehgestell 10 gewonnen wurde, der u.a einem größeren, also axial längeren Antrieb zwischen den beiden Treibrädern 2 zugutekommen kann.

Unter redundanten Gesichtspunkten sind zwischen Motor 8 und Getriebeeingangsseite auch zwei oder mehr Bremseinrichtung 6 vorzusehen, die insbesondere jeweils eine eigene Steuereinrichtung aufweisen.

## Patentansprüche

1. Antrieb (1) eines Schienenfahrzeugs mit zwei um eine Achse (11) rotierende und durch eine Radsatzwelle (3) verbundene Treibräder (2), wobei achsparallel eine um eine weitere Achse (12) rotierende Welle (13) einer dynamoelektrischen Maschine angeordnet ist, wobei die Radsatzwelle (3) und die Welle (13) über ein Getriebe kraftschlüssig verbunden sind, wobei zwischen Getriebe (4) und dynamoelektrischer Maschine (8) zumindest eine Bremsvorrichtung (6) angeordnet ist.

2. Antrieb (1) nach Anspruch 1,
**dadurch gekennzeichnet, dass** die Radsatzwelle (3) mittels Lagern zwischen den Treibrädern (2) oder außerhalb der Treibräder (2) gelagert ist.

3. Antrieb (1) nach Anspruch 1 oder 2,
**dadurch gekennzeichnet, dass** das Getriebe (4) als Zahnradgetriebe, insbesondere einstufiges Stirnradgetriebe ausgebildet ist.

4. Antrieb (1) nach einem der vorhergehenden Ansprüche,
**dadurch gekennzeichnet, dass** zwischen Getriebe (4) und dynamoelektrischer Maschine (8) eine Kupplung vorgesehen ist.

5. Antrieb (1) nach Anspruch 4,
**dadurch gekennzeichnet, dass** die Bremsvorrichtung (6) zwischen Getriebe (4) und Kupplung oder zwischen Kupplung und dynamoelektrischer Maschine (8) angeordnet ist.

6. Drehgestell (10) mit zumindest einem Antrieb nach einem der vorhergehenden Ansprüche.

7. Schienenfahrzeug mit zumindest einem Drehgestell (10) nach Anspruch 6.
